# EUROPEAN PATENT APPLICATION

(11) **EP 4 707 916 A1**
(43) Date of publication of application: **11.03.2026**
(21) Application number: 24881409.7
(22) Date of filing: 09.10.2024
(51) Int. Cl.: G03B 17/04

(54) **TELESCOPIC LENS AND ELECTRONIC DEVICE**

(30) Priority: 23.10.2023 CN 202311377293; 23.10.2023 WO PCT/CN2023/125941
(71) Applicant: Huawei Technologies Co., Ltd., Shenzhen, Guangdong 518129 (CN); AAC Microtech (Changzhou) Co., Ltd., Changzhou, Jiangsu 213167 (CN)
(72) Inventor: YAN, Feng, Shenzhen, Guangdong 518052 (CN); HAN, Junxiang, Shenzhen, Guangdong 518052 (CN); PU, Xiaofeng, Shenzhen, Guangdong 518052 (CN)
(74) Representative: Körber, Martin Hans
(86) International application number: PCT/CN2024/123689
(87) International publication number: WO 2025/087043

(57) **Abstract**

The present invention provides a retractable lens, including a base, a first drive assembly, a lifting assembly, a protective lens element assembly, a second drive assembly, and a lens module. The lifting assembly includes an annular rotor, a rigid ring fastened on a side of the annular rotor, a guide member whose two ends are respectively fastened to the annular rotor and the rigid ring and that extends in a first direction, a pin member that is sleeved on an outer side of the guide member and that is slidably assembled on the guide member, an elastic member connected to the pin member and the rigid ring, and a lifting member movablely connected to the pin member. According to the present invention, a rotational motion of the annular rotor driven by the first drive assembly is converted into an upward/downward motion in the first direction through cooperation between the pin member and the lifting member, so that the retractable lens can have a more compact structure. This effectively reduces a weight and a size of the retractable lens, improves lightness and thinness of the retractable lens, and ensures reliability of the retractable lens.

## Description

### [TECHNICAL FIELD]

The present invention relates to the field of electronic device technologies, and in particular, to a retractable lens and an electronic device.

### [BACKGROUND]

To improve photographing quality of electronic devices (for example, mobile phones), increasingly high requirements are imposed on lenses. For example, retractable lenses are used in the electronic devices to implement zoom. Compared with retractable lenses on conventional single-lens reflex cameras, the retractable lenses disposed on the electronic devices need to meet requirements for lightness and thinness of the electronic devices.

In a related technology, a retractable lens generally adopts a rotary retractable manner. The retractable lens with such a retractable manner is structurally complex, and requires a large quantity of components, which increase a weight and a size of an electronic device. In addition, there is ineffective buffering design in place for drops, resulting in poor drop resistance that makes the electronic device highly susceptible to damage.

Therefore, it is necessary to provide a new retractable lens and electronic device, to resolve technical problems existing in the related technology.

### [SUMMARY]

An objective of the present invention is to provide a retractable lens and an electronic device, to resolve technical problems in which a retractable lens in an electronic device in a related technology has a large size, a large weight, and poor drop resistance.

The technical solutions of the present invention are as follows.

A retractable lens is provided. The retractable lens includes a base, a first drive assembly fastened to the base, a lifting assembly connected to the first drive assembly, a protective lens element assembly fastened to the lifting assembly, a second drive assembly fastened to the base, and a lens module connected to the second drive assembly. The second drive assembly is configured to drive the lens module to move in a first direction. The lifting assembly includes an annular rotor connected to the first drive assembly, a rigid ring fastened on a side of the annular rotor, a guide member whose two ends are respectively fastened to the annular rotor and the rigid ring and that extends in the first direction, a pin member that is sleeved on an outer side of the guide member and that is slidably assembled on the guide member, an elastic member connected to the pin member and the rigid ring, and a lifting member movablely connected to the pin member. The protective lens element assembly is fastened to the lifting member, the lens module is located between the base and the protective lens element assembly, the first drive assembly is configured to drive the annular rotor to rotate about the first direction, and the pin member is configured to: rotate with the annular rotor and drive the lifting member to move up and down in the first direction.

Optionally, the annular rotor includes an annular main body portion and a transmission portion that is fastened on an outer side of the annular main body portion and that is connected to the first drive assembly. The annular main body portion at least partially protrudes in a direction away from the rigid ring to form a mounting cavity, and the guide member, the pin member, and the elastic member are all disposed in the mounting cavity.

Optionally, the mounting cavity is provided with a bottom wall provided opposite to the rigid ring and two side walls that are respectively connected to two ends of the bottom wall and that are provided opposite to each other. One end of the guide member is fastened to the bottom wall, the other end of the guide member is fastened to the rigid ring, and the elastic member is sleeved on the outer side of the guide member, and is disposed between the pin member and the rigid ring.

Optionally, the bottom wall is provided with a first mounting hole, the rigid ring is provided with a second mounting hole that is provided directly opposite to the first mounting hole, and two ends of the guide member are respectively fastened in the first mounting hole and the second mounting hole.

Optionally, a positioning groove is provided on a side that is of the pin member and that is close to the rigid ring, and an end that is of the elastic member and that is away from the rigid ring is assembled in the positioning groove.

Optionally, a plurality of mounting cavities are provided, and the plurality of mounting cavities are spaced apart in a circumferential direction. The guide member, the pin member, and the elastic member jointly form a buffering unit. A plurality of buffering units are disposed, and the plurality of buffering units are one-to-one disposed in the plurality of mounting cavities.

Optionally, a plurality of bumps that are spaced apart are provided on a side that is of the rigid ring and that is away from the annular rotor, the bumps are all located on a same plane, and the bumps are all in contact with the base.

Optionally, a sliding groove is provided on a side that is of the lifting member and that faces the pin member, and the sliding groove includes a first sub-groove, a second sub-groove, and a third sub-groove that are distributed in a circumferential direction and sequentially communicated. A length direction of the first sub-groove is perpendicular to the first direction, the second sub-groove is obliquely provided, and a length direction of the third sub-groove is parallel to the length direction of the first sub-groove. A sliding portion that is assembled in the sliding groove in a sliding manner is disposed on the pin member. When the annular rotor rotates, the sliding portion slides in the first sub-groove, the second sub-groove, and the third sub-groove, to drive the lifting member to move up and down in the first direction.

Optionally, the retractable lens further includes an upper cover that is fastened on a side of the base and that encloses an accommodation cavity together with the base, and the first drive assembly, the lifting assembly, the second drive assembly, and the lens module are all accommodated in the accommodation cavity. The upper cover is provided with an opening that communicates with the accommodation cavity, and the protective lens element assembly is in sealed contact with an inner circumferential wall that is of the upper cover and that surrounds the opening.

An electronic device is provided. The electronic device includes the retractable lens according to any one of the foregoing descriptions.

Beneficial effect of the present invention is as follows: In a process in which the retractable lens extends and retracts, a rotational motion of the annular rotor driven by the first drive assembly is converted into an upward/downward motion in the first direction through cooperation between the pin member and the lifting member, so that the retractable lens can have a more compact structure. This effectively reduces a weight and a size of the retractable lens. In addition, because the pin member is sleeved on the outer side of the guide member, and the elastic member is connected to the pin member and the rigid ring, a height of the elastic member coincides with a height of the guide member, so that an overall height of the lifting assembly can be effectively reduced, and therefore, lightness and thinness of the retractable lens can be improved. Moreover, when the retractable lens falls, an impact force exerted on the protective lens element assembly may be transferred to the pin member through the lifting member. The pin member is connected to the elastic member. In this case, the pin member may slide toward the base and compress the elastic member under force, so that buffering can be implemented through the elastic member, the pin member or another movable component can be prevented from breaking, and reliability of the retractable lens can be ensured.

### [BRIEF DESCRIPTION OF DRAWINGS]

FIG. 1 is a diagram of a structure of an electronic device according to an embodiment of the present invention;
FIG. 2 is a diagram of a structure of a retractable lens according to an embodiment of the present invention;
FIG. 3 is a sectional view, in a direction A-A, of the retractable lens in FIG. 2 in an extended state;
FIG. 4 is a sectional view, in a direction A-A, of the retractable lens in FIG. 2 in a retracted state;
FIG. 5 is an exploded view of a retractable lens according to an embodiment of the present invention;
FIG. 6 is a diagram of a structure of a lifting assembly in a retractable lens according to an embodiment of the present invention;
FIG. 7 is a diagram of an assembly relationship among an annular rotor, a rigid ring, a guide member, an elastic member, and a pin member in a retractable lens according to an embodiment of the present invention;
FIG. 8 is a diagram of a structure of an annular rotor in a retractable lens according to an embodiment of the present invention;
FIG. 9 is a diagram of a structure of a rigid ring in a retractable lens according to an embodiment of the present invention;
FIG. 10 is a diagram of a structure of a pin member in a retractable lens according to an embodiment of the present invention;
FIG. 11 is a diagram of a structure of a lifting member in a retractable lens according to an embodiment of the present invention;
FIG. 12 is a diagram of an assembly relationship among a first drive assembly, a base, and an annular rotor in a retractable lens according to an embodiment of the present invention; and
FIG. 13 is an enlarged view of a detail B in FIG. 12.

### [DESCRIPTION OF EMBODIMENTS]

The following further describes the present invention with reference to accompanying drawings and implementations.

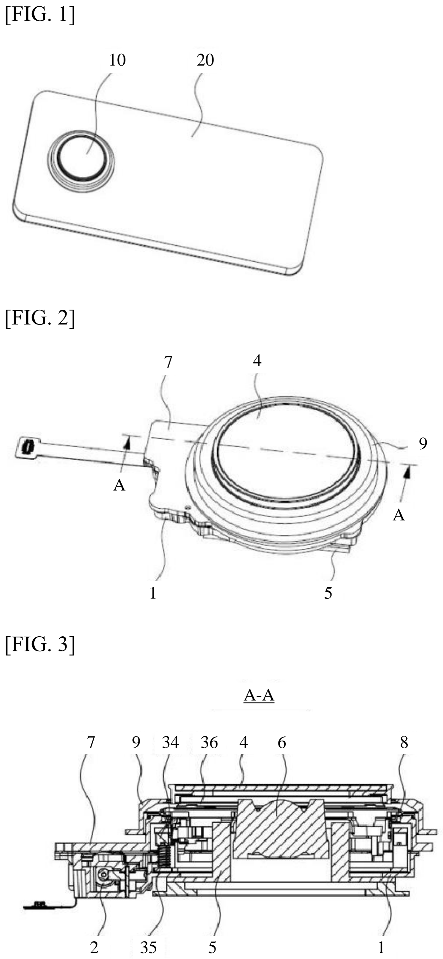

Refer to FIG. 1. An embodiment of the present invention provides an electronic device, including a device body 20 and a retractable lens 10 that is assembled in the device body 20. The electronic device may be a mobile phone. The retractable lens 10 is a rear-facing lens of the mobile phone, and the retractable lens 10 may implement optical zoom through a retractable motion, so that the mobile phone has photographing effect similar to that of a single-lens reflex camera.

Refer to FIG. 2 to FIG. 13. The retractable lens 10 includes a base 1, a first drive assembly 2 fastened to the base 1, a lifting assembly 3 connected to the first drive assembly 2, a protective lens element assembly 4 fastened to the lifting assembly 3, a second drive assembly 5 fastened to the base 1, and a lens module 6 connected to the second drive assembly 5. The second drive assembly 5 is configured to drive the lens module 6 to move in a first direction. The lifting assembly 3 includes an annular rotor 31 connected to the first drive assembly 2, a rigid ring 32 fastened on a side of the annular rotor 31, a guide member 33 whose two ends are respectively fastened to the annular rotor 31 and the rigid ring 32 and that extends in the first direction, a pin member 34 that is sleeved on an outer side of the guide member 33 and that is slidably assembled on the guide member 33, an elastic member 35 connected to the pin member 34 and the rigid ring 32, and a lifting member 36 movablely connected to the pin member 34. The protective lens element assembly 4 is fastened to the lifting member 36, the lens module 6 is located between the base 1 and the protective lens element assembly 4, the first drive assembly 2 is configured to drive the annular rotor 31 to rotate about the first direction, and the pin member 34 is configured to: rotate with the annular rotor 31 and drive the lifting member 36 to move up and down in the first direction.

Refer to FIG. 2, FIG. 3, and FIG. 4. When the retractable lens 10 is in a retracted state and needs to extend, the first drive assembly 2 drives the annular rotor 31 to rotate about the first direction, the pin member 34 rotates with the annular rotor 31 and drives the lifting member 36 to move up in the first direction, and the lifting member 36 drives the protective lens element assembly 4 to move up to form space required for the lens module 6 to move up. Then, the second drive assembly 5 drives the lens module 6 to move up in the first direction, and the lens module 6 extends. When the retractable lens 10 is in an extended state and needs to retract, the second drive assembly 5 drives the lens module 6 to move down in the first direction, and then the first drive assembly 2 drives the protective lens element assembly 4 to move down and return to an original position, to complete retraction.

In a process in which the retractable lens 10 extends and retracts, a rotational motion of the annular rotor 31 driven by the first drive assembly 2 is converted into an upward/downward motion in the first direction through cooperation between the pin member 34 and the lifting member 36, so that the retractable lens 10 can have a more compact structure. This effectively reduces a weight and a size of the retractable lens 10. In addition, because the pin member 34 is sleeved on the outer side of the guide member 33, and the elastic member 35 is connected to the pin member 34 and the rigid ring 32, a height of the elastic member 35 coincides with a height of the guide member 33, so that an overall height of the lifting assembly 3 can be effectively reduced, and therefore, lightness and thinness of the retractable lens 10 can be improved. Moreover, when the retractable lens 10 falls, an impact force exerted on the protective lens element assembly 4 may be transferred to the pin member 34 through the lifting member 36. The pin member 34 is connected to the elastic member 35. In this case, the pin member 34 may slide toward the base 1 and compress the elastic member 35 under force, so that buffering can be implemented through the elastic member 35, the pin member 34 or another movable component can be prevented from breaking, and reliability of the retractable lens 10 can be ensured.

It should be noted that, the first direction is an optical axis direction of the lens module 6. When the retractable lens 10 is in the retracted state and needs to extend, the first drive assembly 2 drives the annular rotor 31 to rotate clockwise (counterclockwise) about the first direction. In this case, when the retractable lens 10 is in the extended state and needs to retract, the first drive assembly 2 drives the annular rotor 31 to rotate counterclockwise (clockwise) about the first direction, to drive the protective lens element assembly 4 to move down and return to the original position. The elastic member 35 is always in an elastically retracted state, to exert resilience toward the annular rotor 31 on the pin member 34. The resilience can ensure that the pin member 34 is tightly pressed against the annular rotor 31 when the annular rotor 31 rotates, so that the pin member 34 and the annular rotor 31 are relatively static, to ensure that the pin member 34 rotates synchronously with the annular rotor 31. In addition, the process in which the retractable lens 10 extends and retracts may also be an auto focus process of the retractable lens 10. The auto focus process of the retractable lens 10 and a lifting process of the lifting assembly 3 may occur simultaneously or asynchronously.

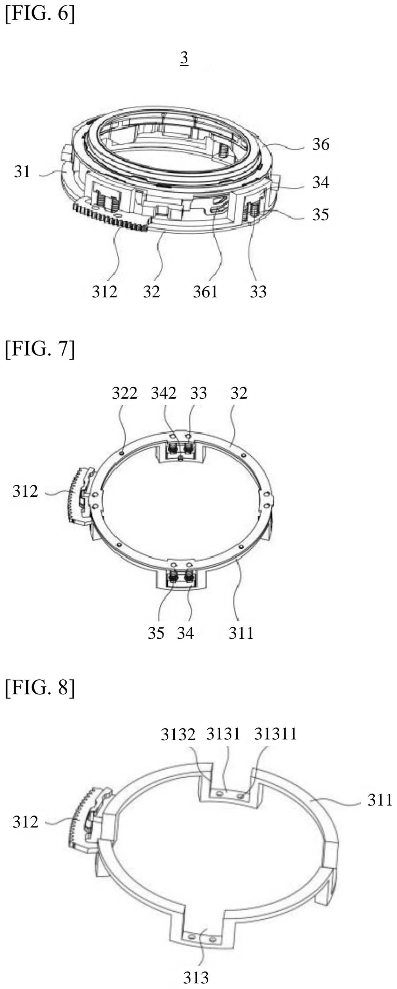

Refer to FIG. 6, FIG. 7, and FIG. 8. The annular rotor 31 includes an annular main body portion 311 and a transmission portion 312 that is fastened on an outer side of the annular main body portion 311 and that is connected to the first drive assembly 2. The annular main body portion 311 at least partially protrudes in a direction away from the rigid ring 32 to form a mounting cavity 313, and the guide member 33, the pin member 34, and the elastic member 35 are all disposed in the mounting cavity 313. The first drive assembly 2 drives, through the transmission portion 312, the annular main body portion 311 to rotate clockwise or counterclockwise. For example, the transmission portion 312 may be a gear structure, with teeth on the gear structure distributed in a circumferential direction, and the first drive assembly 2 is engaged and assembled with the gear structure. The mounting cavity 313 may be formed by providing an open protrusion structure on the annular main body portion 311. During assembly of the lifting assembly 3, the guide member 33, the pin member 34, and the elastic member 35 may be first mounted in the mounting cavity 313, and then the rigid ring 32 is fastened on the annular main body portion 311. That is, the lifting assembly 3 may be assembled in a top-down assembly manner, which is easy to operate and has high reliability.

It should be noted that the rigid ring 32 may be an annular steel sheet, the rigid ring 32 and the annular rotor 31 are fastened through welding, and the annular rotor 31 except a protrusion part is in contact with the rigid ring 32, resulting in a large quantity of contact points between the annular rotor 31 and the rigid ring 32, so that a quantity of weld points can be effectively ensured, and therefore, firmness of connection between the annular rotor 31 and the rigid ring 32 is ensured. The rigid ring 32 may alternatively be a MIM member formed through metal injection molding, so that costs are effectively reduced while implementing accurate dimensional control.

In addition, both the annular rotor 31 and the lifting member 36 may also be formed through MIM metal injection molding, to implement accurate cooperation at low costs.

Refer to FIG. 7 and FIG. 8. The mounting cavity 313 is provided with a bottom wall 3131 provided opposite to the rigid ring 32 and two side walls 3132 that are respectively connected to two ends of the bottom wall 3131 and that are provided opposite to each other. That is, the mounting cavity 313 is in a U shape. One end of the guide member 33 is fastened to the bottom wall 3131, the other end of the guide member 33 is fastened to the rigid ring 32, and the elastic member 35 is sleeved on the outer side of the guide member 33, and is disposed between the pin member 34 and the rigid ring 32. During mounting of the lifting assembly 3, the guide member 33 may be first fastened on the bottom wall 3131, and then the pin member 34 is sleeved on the guide member 33, the elastic member 35 is sleeved on the guide member 33, and the rigid ring 32 is fastened on the annular main body portion 311, to implement top-down assembly. According to an actual requirement, the guide member 33 may be a guide post, the pin member 34 may be a pin block, and the elastic member 35 may be a spring or another element that can have resilience. Therefore, the elastic member 35 may provide buffering protection for the lifting member 36 when a terminal falls. Further, grease or lubricating oil may also be applied between the elastic member 35 and the guide member 33, to resolve a problem of buffering stiction and prolong a service life of a device.

In this embodiment provided in this application, the guide post may be formed through a CNC process, and dimensional accuracy of the guide post obtained through CNC refinement is high, which facilitates guiding. The pin member 34 is integrally formed through a MIM process, and low-magnetic permeability materials such as SUS316L may be selected, to reduce magnetic interference. For example, a problem of surface roughness may be further resolved through magnetic polishing.

Refer to FIG. 7, FIG. 8, and FIG. 9. The bottom wall 3131 is provided with a first mounting hole 31311, the rigid ring 32 is provided with a second mounting hole 321 that is provided directly opposite to the first mounting hole 31311, and two ends of the guide member 33 are respectively fastened in the first mounting hole 31311 and the second mounting hole 321. The first mounting hole 31311 may be a through hole or a counterbore. The guide member 33 is inserted into the first mounting hole 31311 and then is fastened on the bottom wall 3131 through riveting, welding, or the like. The second mounting hole 321 may be a through hole or a counterbore. When the rigid ring 32 is fastened to the annular rotor 31, an end that is of the guide member 33 and that is away from the annular rotor 31 is inserted into the second mounting hole 321, so that the guide member 33 and the rigid ring 32 are fastened to each other. This helps the guide member 33 be fastened to the annular rotor 31 and the rigid ring 32.

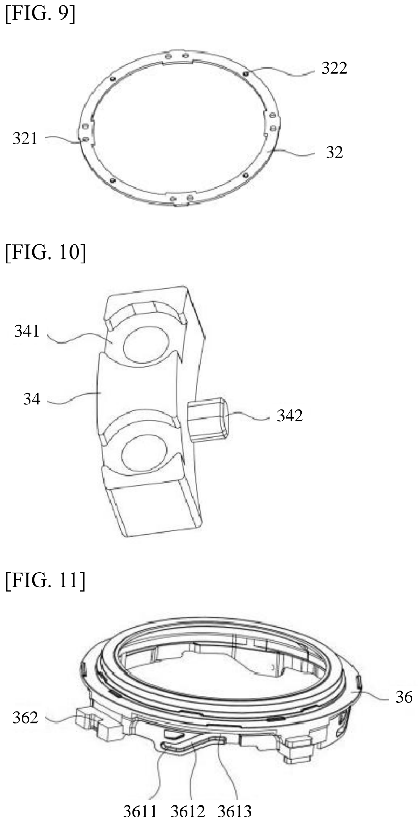

Refer to FIG. 7 and FIG. 10. A positioning groove 341 is provided on a side that is of the pin member 34 and that is close to the rigid ring 32, and an end that is of the elastic member 35 and that is away from the rigid ring 32 is assembled in the positioning groove 341. This helps ensure firmness of connection between the elastic member 35 and the pin member 34, and displacement of the elastic member 35 under force exerted on the pin member 34, which leads to adverse impact on buffering.

Refer to FIG. 6 and FIG. 7. In some embodiments, a plurality of mounting cavities 313 are provided, and the plurality of mounting cavities 313 are spaced apart in a circumferential direction. The guide member 33, the pin member 34, and the elastic member 35 jointly form a buffering unit. A plurality of buffering units are disposed, and the plurality of buffering units are one-to-one disposed in the plurality of mounting cavities 313. For example, four mounting cavities 313 are provided, and the four mounting cavities 313 are spaced apart at an equal distance in the circumferential direction. In this case, four buffering units are correspondingly disposed, so that the lifting assembly 3 is more stable during buffering, and has stronger impact resistance. In addition, two guide members 33 may be disposed on each buffering unit, two elastic members 35 are respectively sleeved on outer sides of the two guide members 33, and one pin member 34 is simultaneously sleeved on the outer sides of the two guide members 33, so that buffering performance of the buffering unit can be improved, and more smoothly sliding of the pin member 34 can also be ensured.

Refer to FIG. 7 and FIG. 9. A plurality of bumps 322 that are spaced apart are provided on a side that is of the rigid ring 32 and that is away from the annular rotor 31, the bumps 322 are all located on a same plane, and the bumps 322 are all in contact with the base 1. It can be ensured that a friction surface at a contact position between the rigid ring 32 and the base 1 is small, and friction between the rigid ring 32 and the base 1 is reduced. This helps improve smoothness of rotation of the annular rotor 31. In addition, it can be ensured that positions of weld points of the rigid ring 32 and the annular rotor 31 do not exceed a friction position. A quantity of bumps 322 is set according to an actual requirement. For example, four bumps 322 are provided in total, and the four bumps 322 are spaced apart at an equal distance in a circumferential direction. The bump 322 may be formed through stamping.

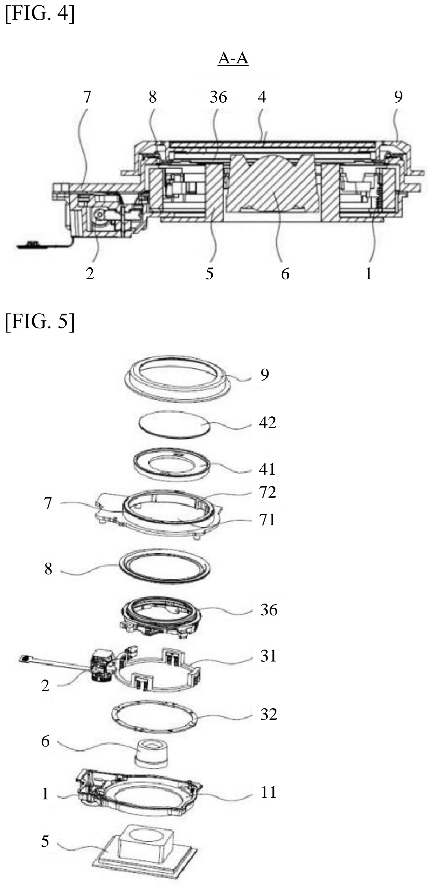

Refer to FIG. 5, FIG. 6, and FIG. 11. A sliding groove 361 is provided on a side that is of the lifting member 36 and that faces the pin member 34, and the sliding groove 361 includes a first sub-groove 3611, a second sub-groove 3612, and a third sub-groove 3613 that are distributed in a circumferential direction and sequentially communicated. A length direction of the first sub-groove 3611 is perpendicular to the first direction, the second sub-groove 3612 is obliquely provided, and a length direction of the third sub-groove 3613 is parallel to the length direction of the first sub-groove 3611. A sliding portion 342 that is assembled in the sliding groove 361 in a sliding manner is disposed on the pin member 34. When the annular rotor 31 rotates, the sliding portion 342 slides in the first sub-groove 3611, the second sub-groove 3612, and the third sub-groove 3613, to drive the lifting member 36 to move up and down in the first direction. The first sub-groove 3611 and the third sub-groove 3613 are not at a same height, and provision of the first sub-groove 3611, the second sub-groove 3612, and the third sub-groove 3613 makes the sliding groove 361 in a "Z" shape or an inverted "Z" shape. When the annular rotor 31 rotates clockwise, the sliding portion 342 on the pin member 34 slides sequentially in the first sub-groove 3611, the second sub-groove 3612, and the third sub-groove 3613, the sliding portion 342 drives the lifting member 36 to move up, so that the retractable lens 10 extends. When the annular rotor 31 rotates counterclockwise, the sliding portion 342 on the pin member 34 slides sequentially in the third sub-groove 3613, the second sub-groove 3612, and the first sub-groove 3611, and the sliding portion 342 drives the lifting member 36 to move down, so that the retractable lens 10 retracts.

It should be noted that a plurality of sliding grooves 361 are provided, the plurality of sliding grooves 361 are spaced apart in the circumferential direction, and sliding portions 342 of a plurality of pin members 34 are one-to-one assembled in the plurality of sliding grooves 361. This helps the pin member 34 drive the lifting member 36 to move up and down. In addition, the plurality of pin members 34 also helps support the lifting member 36, to ensure more stable cooperation between the pin member 34 and the lifting member 36.

Refer to FIG. 3, FIG. 4, and FIG. 5. The retractable lens 10 further includes an upper cover 7 that is fastened on a side of the base 1 and that encloses an accommodation cavity 11 together with the base 1, and the first drive assembly 2, the lifting assembly 3, the second drive assembly 5, and the lens module 6 are all accommodated in the accommodation cavity 11. The upper cover 7 is provided with an opening 71 that communicates with the accommodation cavity 11, and the protective lens element assembly 4 is in sealed contact with an inner circumferential wall that is of the upper cover 7 and that surrounds the opening 71. Specifically, the first drive assembly 2 drives the protective lens element assembly 4 to move relative to the opening 71 in the first direction, to form space required for the lens module 6 to move up. Because the protective lens element assembly 4 is in sealed contact with the inner circumferential wall that is of the upper cover 7 and that surrounds the opening 71, external contaminants can be prevented from entering the accommodation cavity 11 through the opening 71 of the upper cover 7 and contaminating the lens module 6, and the lens module 6 can also be protected from impact and collision.

Refer to FIG. 2 and FIG. 5. The protective lens element assembly 4 includes a lens element bracket 41 fastened to an end that is of the lifting member 36 and that is away from the base 1 and a protective lens element 42 fastened to the lens element bracket 41. The lifting member 36 and the lens element bracket 41 are both in annular shapes. The retractable lens 10 further includes a sealing rubber ring 8 that is connected to the upper cover 7 and the lens element bracket 41 and a decoration member 9 that is fastened to the upper cover 7 and that is sleeved on an outer side of the lens element bracket 41. The sealing rubber ring 8 may implement a sealing connection between the upper cover 7 and the lens element bracket 41, to isolate the accommodation cavity 11 from an external environment. The sealing rubber ring 8 is elastic, so that the lens element bracket 41 can move relative to the upper cover 7, to ensure that the first drive assembly 2 can drive the protective lens element assembly 4 to move up and down.

Refer to FIG. 5 and FIG. 11. In some embodiments, a limiting block 72 is disposed on one of the upper cover 7 and the lifting member 36, and the other of the upper cover 7 and the lifting member 36 is provided with a limiting groove 362. A length of the limiting groove 362 extends in the first direction. The limiting block 72 is assembled in the limiting groove 362. The limiting block 72 and the limiting groove 362 cooperate with each other, so that the lifting member 36 can move up and down only in the first direction, to prevent the lifting member 36 from rotating during upward and downward movement. According to an actual requirement, the limiting block 72 may be disposed on an inner side of the upper cover 7, and the limiting groove 362 may be provided on an outer side of the lifting member 36.

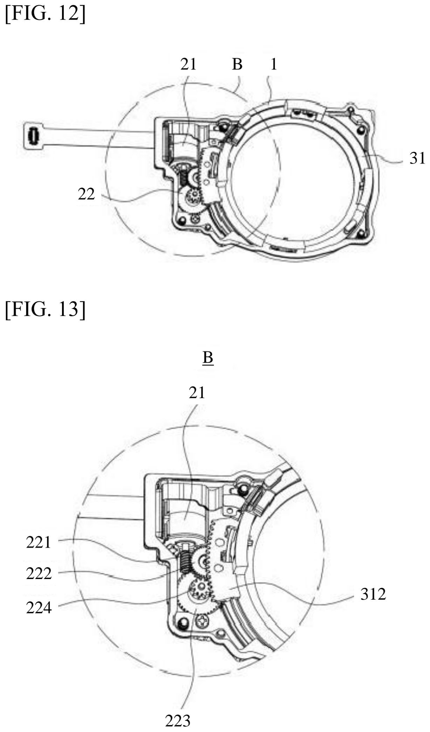

Refer to FIG. 12 and FIG. 13. The first drive assembly 2 includes a rotation motor 21 fastened to the base 1 and a gear group 22 that is connected to the rotation motor 21 and that is engaged and assembled with the transmission portion 312 of the annular rotor 31. An output shaft of the rotation motor 21 is perpendicular to the first direction. The gear group 22 can rotate in a plurality of manners, provided that an output of the rotation motor 21 can be converted into a rotational motion of the annular rotor 31. In a specific example, the gear group 22 includes a worm fastened to the output shaft of the rotation motor 21, a helical gear 222 engaged with the worm, a first gear that is coaxially arranged with and fastened to the helical gear 222, a second gear 223 engaged with the first gear, and a third gear 224 that is coaxially arranged with and fastened to the second gear 223. The third gear 224 is engaged with the gear structure of the transmission portion 312 of the annular rotor 31.

The second drive assembly 5 may be a linear voice coil motor. An image sensor module that is disposed directly opposite to the lens module 6 is disposed on a device body 20 of an electronic device. When the second drive assembly 5 drives the lens module 6 to move up, the lens module 6 moves in a direction away from the image sensor module. When the second drive assembly 5 drives the lens module 6 to move down, the lens module 6 moves toward a direction close to the image sensor module. Therefore, optical zoom of the retractable lens 10 is implemented, so that the electronic device can implement better portrait photographing and achieve better shallow depth of field effect. According to an actual requirement, the second drive assembly 5 may alternatively be a stepper motor, a lead screw motor, or the like. The foregoing descriptions are merely implementations of the present invention. It should be noted herein that a person of ordinary skill in the art may make improvements without departing from the inventive concept of the present invention, and these improvements shall all fall within the protection scope of the present invention.

## Claims

1. A retractable lens, comprising a base, a first drive assembly fastened to the base, a lifting assembly connected to the first drive assembly, a protective lens element assembly fastened to the lifting assembly, a second drive assembly fastened to the base, and a lens module connected to the second drive assembly, wherein the second drive assembly is configured to drive the lens module to move in a first direction, the lifting assembly comprises an annular rotor connected to the first drive assembly, a rigid ring fastened on a side of the annular rotor, a guide member whose two ends are respectively fastened to the annular rotor and the rigid ring and that extends in the first direction, a pin member that is sleeved on an outer side of the guide member and that is slidably assembled on the guide member, an elastic member connected to the pin member and the rigid ring, and a lifting member movablely connected to the pin member, the protective lens element assembly is fastened to the lifting member, the lens module is located between the base and the protective lens element assembly, the first drive assembly is configured to drive the annular rotor to rotate about the first direction, and the pin member is configured to: rotate with the annular rotor and drive the lifting member to move up and down in the first direction.

2. The retractable lens according to claim 1, wherein the annular rotor comprises an annular main body portion and a transmission portion that is fastened on an outer side of the annular main body portion and that is connected to the first drive assembly, the annular main body portion at least partially protrudes in a direction away from the rigid ring to form a mounting cavity, and the guide member, the pin member, and the elastic member are all disposed in the mounting cavity.

3. The retractable lens according to claim 2, wherein the mounting cavity is provided with a bottom wall provided opposite to the rigid ring and two side walls that are respectively connected to two ends of the bottom wall and that are provided opposite to each other, one end of the guide member is fastened to the bottom wall, the other end of the guide member is fastened to the rigid ring, and the elastic member is sleeved on the outer side of the guide member, and is disposed between the pin member and the rigid ring.

4. The retractable lens according to claim 3, wherein the bottom wall is provided with a first mounting hole, the rigid ring is provided with a second mounting hole that is provided directly opposite to the first mounting hole, and two ends of the guide member are respectively fastened in the first mounting hole and the second mounting hole.

5. The retractable lens according to claim 3, wherein a positioning groove is provided on a side that is of the pin member and that is close to the rigid ring, and an end that is of the elastic member and that is away from the rigid ring is assembled in the positioning groove.

6. The retractable lens according to claim 2, wherein a plurality of mounting cavities are provided, the plurality of mounting cavities are spaced apart in a circumferential direction, the guide member, the pin member, and the elastic member jointly form a buffering unit, a plurality of buffering units are disposed, and the plurality of buffering units are one-to-one disposed in the plurality of mounting cavities.

7. The retractable lens according to claim 1, wherein a plurality of bumps that are spaced apart are provided on a side that is of the rigid ring and that is away from the annular rotor, the bumps are all located on a same plane, and the bumps are all in contact with the base.

8. The retractable lens according to claim 1, wherein a sliding groove is provided on a side that is of the lifting member and that faces the pin member, the sliding groove comprises a first sub-groove, a second sub-groove, and a third sub-groove that are distributed in a circumferential direction and sequentially communicated, a length direction of the first sub-groove is perpendicular to the first direction, the second sub-groove is obliquely provided, a length direction of the third sub-groove is parallel to the length direction of the first sub-groove, a sliding portion that is slidably assembled in the sliding groove is disposed on the pin member, and when the annular rotor rotates, the sliding portion slides in the first sub-groove, the second sub-groove, and the third sub-groove, to drive the lifting member to move up and down in the first direction.

9. The retractable lens according to claim 1, wherein the retractable lens further comprises an upper cover that is fastened on a side of the base and that encloses an accommodation cavity together with the base, the first drive assembly, the lifting assembly, the second drive assembly, and the lens module are all accommodated in the accommodation cavity, the upper cover is provided with an opening that communicates with the accommodation cavity, and the protective lens element assembly is in sealed contact with an inner circumferential wall that is of the upper cover and that surrounds the opening.

10. An electronic device, comprising the retractable lens according to any one of claims 1 to 9.
